# EUROPEAN PATENT APPLICATION

(11) **EP 0 967 493 A1**
(43) Date of publication of application: **29.12.1999**
(21) Application number: 98500171.8
(22) Date of filing: 20.07.1998
(51) Int. Cl.: G01V 1/00

(54) **An earthquake or shockwave warning system**

(30) Priority: 24.06.1998 ES
(71) Applicant: Plumley, Kevin More, 36203 Vigo (Pontevedra) (ES)
(72) Inventor: Plumley, Kevin More, 36203 Vigo (Pontevedra) (ES)

(57) **Abstract**

Radio signals emitted by cheap but robust sensors at or near the epicentres of earthquakes and containing information regarding the strength and position of such significant seismic shocks, can be transmitted to and processed by a pre-programmed computer which can immediately relay signals encoded with information regarding the strength and imminence of the spreading shock-waves relevant to populations in the vicinity in such a way that, by this earthquake or shock-wave warning system, the populations may escape the worst consequences of such phenomena.

## Description

The invention refers to an earthquake or shock-wave warning system, by which populations may be warned of impending seismic shocks and have time to leave buildings.

Earthquakes harm relatively few people in the open, and are less of a problem than the buildings thus caused to fall, most casualties resulting from collapsing houses and fulling masonry. Therefore an immediate warning is needed to enable people to leave and keep clear of buildings, especially in the case of violent earthquakes.

While seismometers are known, and though they record earthquakes, they are not used in any systematic way to provide warning to the areas to be affected by the impending shock-waves. The cheap and simple system for which patent protection is here sought, is intended to provide a worldwide service which does not exist at present, by which lives may be saved.

An essential element in this earthquake or shock-wave warning system is that simple sensors at, say, five-mile intervals, sense the strength of seismic shocks and, if the shocks are strong enough, transmit signals via satellite or cable to a central computer, or computer-controlled transmitter-receiver, which transmits warnings to populations in the path of the shock. Shock-waves, irrespective of strength, travel through the earth at a mere mile or two per second, depending on consistency, but the radio or cable signal will be at virtually the speed of light. The nearest sensors, the computer and thus the receivers of its warning signals would all react to a seismic shock at the latest within two seconds - i.e. before the expanding shock-wave has left its immediate epicentre. Populations even near the epicentres of strong earthquakes would therefore be alerted and - if not all - then some, would have time to flee buildings which otherwise would entomb them. Others at greater distances, but - by reason of the strength of the shock - still in mortal danger, would certainty have time to escape.

The sensors will be differentiated from each other by a binary code component in the radio signal of each. This will identify both the sensors and their individual locations to the computer, and will also permit control of priority, which otherwise would be generally related to shock-strength.

Each sensor will consist of a simple but robust, waterproof, ideally plastic container which can be driven into and located in the ground. Within each sensor, vertical and horizontal central columns bear contact disks. Against these disks three or more terminally-weighted, fine spring-steel wires will beat in response to the relative strength of the shock agitating them. This contact of wire against disk completes an electrical circuit, emitting radio signals of shocks only above a particular level of danger. The more vigorous the shock, the higher up or further along the central disks will contact be made, thus emitting signals of a different harmonic and reflecting the shock-strength. Alternatively, a central wire or wires can vibrate within a convexly-curved cone of peripheral contacts. Wires of different shape, curvature, attachment, length or thickness will indicate different types of earth movement, such as vibration or waves.

The battery-powered signal is transmitted only during the period of the shock, the system otherwise remaining dormant. It may be possible and convenient to recharge the battery by means of a solar cell. Simple aerials would be of insulated, flexible spring-steel, which would not be damaged or incapacitated by accidental contact. Routine transponder reaction can check the effectiveness of the sensors and the viability of batteries. The sensors may be fitted with means of anchoring them in position either by providing them with a barbed shape, or by protruding simple plastic 'roots' through apertures in their case and into the ground.

Ideally the sensors would be in contact with rock, and, where there is no soil, be bolted to a rock surface; but either in soil or on rock, it may be necessary to subject each to a brief proof or test of their response to a standard shock, so that they may be calibrated to uniformity of reaction or signal either by tensing or slackening the wires, or by registering each response in the computer so that it can allow for the strength or weakness of the response of each sensor in its individual environment.

In a possible alternative, such dart-like sensors may be 'sown' from the air over inaccessible land and sea, the computer 'learning' the identity, calibration strength and position of such sensors and their functioning capability.

In loose soil or sand, the sensor may be screwed to a plastic taproot, which is driven into the ground and pierced with plastic sub-roots, to hold the whole firm and to absorb the shock and transfer it to the sensor.

At the central receiver - one may be sufficient for the entire planet, and the use of a dedicated line to relay signals from satellite to computer and from computer to satellite could obviate the need of the said radio receiver and transmitter - a computer collates the signals from the various sensors, computes the position of the epicentre and the strength of the spreading shock-waves, and emits - or causes a transmitter to broadcast - a signal by line, radio or satellite to local receivers in the area to be affected. This will take only fractions of a second. The computer automatically encodes the broadcast warning so that the receiver at each point in the field of the spreading shock-waves will receive a signal appropriate to the calculated strength of the shock-waves anticipated at that position. - At the moment this method is preferred to that of each receiver interpreting its relevant data from a constant signal of shock-strength and -position from the computer or transmitter, though local computation of generalised information remains a legitimate alternative.

Each receiver will activate a generalised alarm signal of the strength appropriate to its local area, by which the population may know what to expect. Each local warning will be in a form which will vary according to the predicted strength of the on-coming shock, and can also inform of the diminishing interval until its arrival.

In areas where the shock-waves are too slight to cause damage, the alarm would not be activated. Alarms may also vary with local building standards, which can be programmed into the receiver of the signal to provide varied local alerts. Thus, only in areas where damage and resulting death can be expected would the high-emergency alert be sounded.

Warning may be general, by such means as local sirens, or even within individual buildings where necessary, and may include such variations as light-warnings or warbling tones for the deaf and partially deaf, or an agreed signal emitted by telephone companies to all telephones in the area, and broadcast to radio and television screens in the affected zone.

This whole process can be automated so that it all happens virtually instantaneously, the computer-calculated warning signal returning so that before the shock-wave has advanced more than another mile or two from its initial point of recognition, the populations will have been alerted not only to the fact of the shock, but to its strength and proximity.

In this way, even people near the immediate area of the epicentre itself will have time to leave buildings and seek open ground, so avoiding falling debris. In cases of catastrophic shocks, many lives may be saved.

An alternative method is for the local sensors to activate the warning systems of local populations directly or via satellite connection, but as, at this time and with present technology, this would involve more powerful transmitters in more complex and expensive sensors, it may be preferable to proceed with the simple method as described above for the time being, the same being so with battery-powered, in preference to inertia-, kinetic-energy- or clockwork-produced, signals.

It is not yet known whether the same method can be used to sense and warn of sea-floor shocks approaching coastal populations, but the same principle may be applied by a variation on the location of sensors, perhaps laid in lines perpendicular to the coastline, but acting in the same way, or by use of low-frequency signal transmission.

Need for an intermediate booster to relay the sensor signals to the satellite for on-passing to the receiver or computer will depend on topography, signal strength etc, but only empirical evidence can decide this. If so, existing telegraphic equipment may accomplish it. The need for dedicated channel accommodation on satellites must also be considered.

The computer may 'sip' the continuing sensor signals to gauge the progress of the after-shocks or renewed shocks, calling for samples from sensors wit pertinent identification codes as required, selective shock-strength otherwise determining priority of reception and processing.

Use of a randomly pre-arranged system of codes can help guard the system against intrusion and opportunistic misuse.

Inaccessible or impoverished regions, from which satellite access may be difficult, can use a local battery-powered transmitter to relay sensor signals to local, pre-programmed receivers, which emit warnings appropriate to shock-strength, and relay them also to further local transmitters which pass the signals as far as is necessary.

The same type of sensors, but using wires and contacts which respond to weak shocks, and emitting signals of different frequency to a separate computer or computers, may also be used to detect impending volcanic activity in areas of active vulcanism, where the situation tends to be chronic rather than acute, or in earth tremors in a sense of more general scientific interest rather than emergency.

## Claims

1. An earthquake or shock-wave warning system is characterised by the production of individual radio-signals at the sites of earthquakes and in their immediate surroundings in such a way that both the strength of the shocks producing them and their positions are evident in the radio signals.

2. An earthquake or shock-wave warning system as claimed in Claim 1 is characterised by the reception, at a central receiver, of signals of significant strength communicated via satellite, radio or cable.

3. An earthquake or shock-wave warning system as claimed in Claims 1 and 2 is characterised by the automatic transfer of the said signals from the earthquake zone to a pre-programmed computer.

4. An earthquake or shock-wave warning system as claimed in Claims 1 to 3 is characterised by the automatic computer-processing of the information contained in the signals to determine the location and strength of the shock-waves resulting from the earthquake.

5. An earthquake or shock-wave warning system as claimed in Claims 1 to 4 is characterised by the pre-programmed computation of the force of the spreading shock-waves as they will be experienced at particular points in the area round the site of the earthquake.

6. An earthquake or shock-wave warning system as claimed in Claims 1 to 5 is characterised by the automatic passing of signals, encoded by the computer in relation to the strength of the spreading shock-waves, to a transmitter for transmission of this information to those relevant positions in the area surrounding the site of the earthquake.

7. An earthquake or shock-wave warning system as claimed in Claims 1 to 6 is characterised by the reception, at those positions around the site of the earthquake, of the signals relevant to the strength of the on-coming shock-waves, and the pre-programmed sounding of an alarm indicating their strength and proximity as predicted by the computer, so that the population will know the degree of urgency appropriate to them.

8. An earthquake or shock-wave warning system as claimed in Claims 1 to 7 is characterised by the use of: - cheap and simple sensors as described, implanted at regular intervals or 'sown' by aircraft over the surface of the land and in the sea-floor, in such a way that they register and transmit signals relevant to the strength and position of earthquakes and their spreading shock-waves, used in conjunction with a central receiver, pre-programmed computer, transmitter and local receivers, with automated sirens, amplified whistles, horns, bells, gongs, telephoned, voiced or broadcast means of warning.

9. An earthquake or shock-wave warning system as claimed in Claims 1 to 8 is characterised by the use of a dedicated line to relay signals from satellite to computer, and from computer to satellite, which could obviate the use of the said radio receiver and transmitter.

10. An earthquake or shock-wave warning system as claimed in Claims 1 to 9 is characterised by the use of any and all these things and any and all variations of them that may be necessary in such a system to provide the fact of such a warning system in practical use.
